# EUROPÄISCHE PATENTSCHRIFT

(11) **EP 3 172 068 B1**
(45) Veröffentlichungstag und Bekanntmachung des Hinweises auf die Patenterteilung: **07.10.2020**
(21) Anmeldenummer: 15734071.2
(22) Anmeldetag: 02.07.2015
(51) Int. Cl.: B60G 7/00, B60G 17/015, B62D 7/14, B62D 9/04, B62D 17/00

(54) **VORRICHTUNG ZUM VERSTELLEN VON STURZ UND/ODER SPUR EINES FAHRZEUGRADS**
DEVICE FOR ADJUSTING CAMBER AND/OR TOE OF A VEHICLE WHEEL
DISPOSITIF POUR RÉGLER LE CARROSSAGE ET/OU PARALLÉLISME D'UNE ROUE D'UN VÉHICULE

(30) Priorität: 26.07.2014 DE 102014011193
(43) Veröffentlichungstag der Anmeldung: 31.05.2017
(73) Patentinhaber: Audi AG, 85045 Ingolstadt (DE)
(72) Erfinder: KLINGER, Thomas, 85057 Ingolstadt (DE); POURROY-SOLARI, Vincent, 74230 Thones (FR)
(74) Vertreter: Reichert, Thomas Klaus
(86) Internationale Anmeldenummer: PCT/EP2015/001344
(87) Internationale Veröffentlichungsnummer: WO 2016/015808

(56) Entgegenhaltungen:
- WO-A1-2005/047030
- DE-A1-102009 006 903
- DE-A1-102009 058 489
- DE-A1-102009 058 490
- DE-A1-102012 206 337
- US-A- 5 009 447
- US-A1- 2004 160 033

## Beschreibung

Die Erfindung betrifft eine Vorrichtung zum Verstellen von Sturz und/oder Spur eines Kraftfahrzeugrades nach dem Oberbegriff des Patentanspruches 1 und nach dem Oberbegriff des Patentanspruches 3.

Aus der DE 10 2009 058 489 A1 ist eine Vorrichtung bekannt, bei der ein Radträger für ein Fahrzeugrad mehrteilig gestaltet ist, und zwar mit einem radseitigen Trägerteil und einem achsseitigen Führungsteil sowie mit dazwischen angeordneten Drehteilen. Im radseitigen Trägerteil ist ein Radlager integriert, in dem ein Radnabenabschnitt eines, das Fahrzeugrad tragenden Radflansches drehbar gelagert ist. Am achsseitigen Führungsteil sind die Lenker der Radaufhängung des Fahrzeugs anlenkbar. Die dazwischen angeordneten Drehteile wirken mit Schrägflächen zusammen, die eine zur Drehachse des achsseitigen Drehteils geneigte Drehachse des radseitigen Drehteils definieren. Auf diese Weise kann bei einem Drehantrieb zumindest eines der Drehteile das radseitige Drehteil zur Spur- oder Sturzverstellung des Fahrzeugrads um einen Taumelpunkt verschwenkt werden.

Bei einem Bremsvorgang wird vom Bremssattel ein Bremsmoment erzeugt, das über den Radträger zum Fahrzeugaufbau geleitet wird, wodurch die Gefahr besteht, dass das Sturz- und/oder Spurverhalten des Radträgers unbeabsichtigt beeinflusst wird. Um eine Einleitung des Bremsmomentes in die beiden Drehteile zu vermeiden, ist das radseitige Trägerteil in der DE 10 2009 058 489 A1 über eine bauraumintensive Drehmomentbrücke, das heißt ein Kardangelenk, auf dem achsseitigen Führungsteil abgestützt.

Aus der WO 2005/047030 A1 ist eine gattungsgemäße Vorrichtung zum Verstellen von Sturz und/oder Spur eines Fahrzeugrads bekannt. Weitere Vorrichtungen zum Verstellen von Sturz und/oder Spur eines Fahrzeugrads sind aus der US 5 009 447 A, aus der DE 10 2005 006903 A1 und aus der DE 10 2009 058 490 A1 bekannt.

Die Aufgabe der Erfindung besteht darin, eine Vorrichtung bereitzustellen, die sowohl fertigungstechnisch einfach als auch gegenüber auftretenden Radkräften ausreichend bauteilsteif realisierbar ist.

Die Aufgabe ist durch die Merkmale des Patentanspruches 1 oder 3 gelöst. Bevorzugte Weiterbildungen der Erfindung sind in den abhängigen Ansprüchen offenbart.

Erfindungsgemäß ist radial außerhalb der Drehteile eine Lagerstelle ausgebildet, an der das Trägerteil und das Führungsteil aneinander angelenkt sind. Zur Abstützung des mit einem Bremsmoment beaufschlagten Trägerteils ist die Lagerstelle in der Radachsen-Umfangsrichtung hart ausgelegt. Demgegenüber ist die Lagerstelle für ein störungsfreies (das heißt im Vergleich zur Radachsen-Umfangsrichtung leichtgängigeres) Verstellen des Trägerteils um den Spur und/oder Sturzwinkel in der Fahrzeugquerrichtung weich ausgelegt. Die Bremsmoment-Abstützung erfolgt somit nur durch eine einzige Lagerstelle zwischen dem Trägerteil und dem Führungsteil. Die Lagerstelle ist daher - im Vergleich zum Stand der Technik - wesentlich bauraumgünstiger sowie bauteilreduzierter im Radträger verbaut.

In einer technischen Realisierung ist die Lagerstelle ein Gummimetalllager, das in der Radachsen-Umfangsrichtung eine harte Kennung und in der Fahrzeugquerrichtung eine weiche Kennung aufweist. Die Lagerstelle kann beispielhaft aus einem Lagergehäuse und einem Lagerkern aufgebaut sein, die insbesondere jeweils am Trägerteil und am Führungsteil materialeinheitlich und einstückig angeformt sind. Zur Bereitstellung der Lager-Querweichheit kann der Lagerkern um einen Lagerweg zwischen Queranschlägen teleskopartig verstellbar gegenüber dem Lagergehäuse sein.

Alternativ zur obigen Ausführung ist die Lagerstelle zwischen dem Trägerteil und dem Führungsteil als ein Lagergelenk ausgeführt. Das Lagergelenk weist in Kombination ein in einem Lagerpartner (das heißt Trägerteil oder Führungsteil) ausgebildetes Kugelgelenk und ein im anderen Lagerpartner (das heißt Führungsteil oder Trägerteil) ausgebildetes Verschiebegelenk auf.

Um die erforderliche Funktionalität zu erfüllen, übernimmt das Kugelgelenk in der Fahrzeugquerrichtung die erforderliche harte Ausführung. Das Verschiebegelenk kann aufgrund seiner Ausrichtung annähernd parallel zur Radachse für die Weichheit in der Fahrzeugquerrichtung sorgen.

In einer technischen Realisierung kann das Kugelgelenk eine Gelenkkugel aufweisen, die in korrespondierenden Gelenkpfannen des einen Lagerpartners (zum Beispiel Trägerteil) schwenkbar gelagert sind. Die Gelenkkugel kann beispielhaft mit einem Gelenkstab verlängert sein, der zur Herstellung der Querweichheit der Lageranordnung in der Querrichtung in einem Lagerkanal des Verschiebegelenks im Wesentlichen spielfrei verschiebbar ist.

Alternativ dazu kann das Kugelgelenk und/oder das Verschiebegelenk jeweils auch als ein Gummimetalllager ausführbar sein. Die Gummimetalllager sind so ausgelegt, dass die oben beschriebenen Funktionalitäten des Kugelgelenks und des Verschiebegelenks erfüllt sind.

In einer bevorzugten technischen Realisierung kann das radseitige Trägerteil des Radträgers über ein Drehlager auf dem radseitigen Drehteil abgestützt sein. Zudem kann in dem radseitigen Drehteil ein Radlager integriert sein. In dem Radlager ist ein Radnabenabschnitt eines, das Fahrzeugrad tragenden Radflansches drehbar gelagert. In diesem Fall trägt das radseitige Trägerteil nur noch den Bremssattel und gegebenenfalls den Antriebsmotor für das radseitige Drehteil. Dadurch wird die Lagerstelle zwischen dem radseitigen Drehteil und dem radseitigen Trägerteil aus dem Radkraftfluss genommen und kräftemäßig entlastet. Dies führt dazu, dass nur noch drei Lagerstellen in Serie im Radkraftfluss geschaltet sind. Die vierte Lagerstelle, das heißt das Drehlager zwischen dem radseitigen Trägerteil und dem radseitigen Drehteil, kann dagegen kleiner ausgelegt sein, da die auf dieses Drehlager einwirkenden Kräfte und Momente von zum Beispiel der Bremsanlage sehr viel geringer ausfallen. Weiterhin erhöht sich durch den Wegfall der vierten Lagerstelle aus dem Radkraftfluss die Sturzsteifigkeit des Lagerverbundes, wodurch die verbleibenden Lagerstellen bei gleichbleibender Sturzsteifigkeit wieder kleiner ausgeführt werden können. In Summe reduziert sich - im Vergleich zum Stand der Technik - der Bauraumbedarf sowie das Bauteilgewicht der Vorrichtung beträchtlich.

Bevorzugt kann das radseitige Trägerteil radial außerhalb des radseitigen Drehteils angeordnet sein, wodurch die Vorrichtung in Axialrichtung besonders kompakt gestaltet werden kann. In diesem Fall kann das Trägerteil über eine radial innere Lagermantelfläche unter Zwischenschaltung des Drehlagers auf einer radial äußeren Lagermantelfläche des radseitigen Drehteils abgestützt sein. Das radseitige Drehteil kann in Doppelfunktion gleichzeitig auch das äußere Lagergehäuse des Radlagers bilden. Radial innerhalb des, das äußere Lagergehäuse bildenden Drehteils kann ein dazu korrespondierender Radnabenabschnitt drehbar gelagert sein, der in Querrichtung nach außen in einen, das Fahrzeugrad tragenden Radflansch übergeht. Die Lageraußenbahnen des Radlagers können unmittelbar am Innenumfang des radseitigen Drehteils eingearbeitet sein. Für einen einfacheren Kundendienst kann es jedoch bevorzugt sein, ein demontierbares Radlager zu verwenden, dessen Lageraußenbahnen nicht unmittelbar am Innenumfang des radseitigen Drehteils eingearbeitet sind.

Das achsseitige Drehteil und das radseitige Drehteil können jeweils mit einem Antriebsmotor trieblich verbunden sein. Bevorzugt können die Drehteile jeweils Bestandteile eines Zahnradtriebs sein, bei dem der Elektromotor über eine Zahnradstufe das achsseitige und/oder radseitige Drehteil antreibt. Bei gleichsinniger oder gegensinniger Verdrehung der Drehteile erfolgt eine Verschwenkung des Trägerteils um einen vorgegebenen Spur- und/oder Sturzwinkel. Eine besonders bauraumsparende Anordnung ergibt sich, wenn das radseitige Drehteil einen Zahnradabschnitt aufweist, der Bestandteil des oben erwähnten Zahnradtriebs ist und in Axialrichtung betrachtet zwischen der Trägerteil-Abstützstelle und der Schrägfläche des radseitigen Drehteils angeordnet ist.

Um eine fertigungstechnisch einfache Einbindung der Vorrichtung in eine herkömmliche Radaufhängung zu ermöglichen, kann der Radträger ein achsseitiges Führungsteil aufweisen. Am achsseitigen Führungsteil können die Lenker, die Stabilisator-Koppelstellen und/oder Dämpfer/Federn der Radaufhängung des Fahrzeugs angelenkt sein. Zudem kann das Führungsteil bewegungsentkoppelt, das heißt über ein Drehlager, auf dem achsseitigen Drehteil abgestützt sein. Das Führungsteil kann, ähnlich wie das radseitige Trägerteil, radial außerhalb des achsseitigen Drehteils angeordnet sein. In diesem Fall kann das Führungsteil über eine radial innere Lagermantelfläche unter Zwischenlage des Drehlagers auf einer radial äußeren Lagermantelfläche des achsseitigen Drehteils abgestützt sein. Bevorzugt kann zwischen dem Trägerteil und dem Führungsteil ein Drehmomentübertragungselement positioniert sein, und zwar zur Bildung eines Momentenpfads, bei dem ein Drehmoment, insbesondere ein Bremsmoment, vom Trägerteil zum Führungsteil übertragen wird, und die achs- und radseitigen Drehteile überbrückt werden.

Die Erfindung und ihre vorteilhaften Aus- und Weiterbildungen sowie deren Vorteile werden nachfolgend anhand von Zeichnungen näher erläutert.

Es zeigen:
- Fig. 1: eine Prinzipdarstellung einer aus dem Stand der Technik bekannten Vorrichtung zum Verstellen von Spur- und Sturzwinkel eines Kraftfahrzeugrades;
- Fig. 2: in einem Halbschnitt die obere Hälfte einer erfindungsgemäßen Vorrichtung in einer gegenständlichen Ausführung; und
- Fig. 3: in einer Detailansicht eine weitere Ausführungsform der Erfindung.

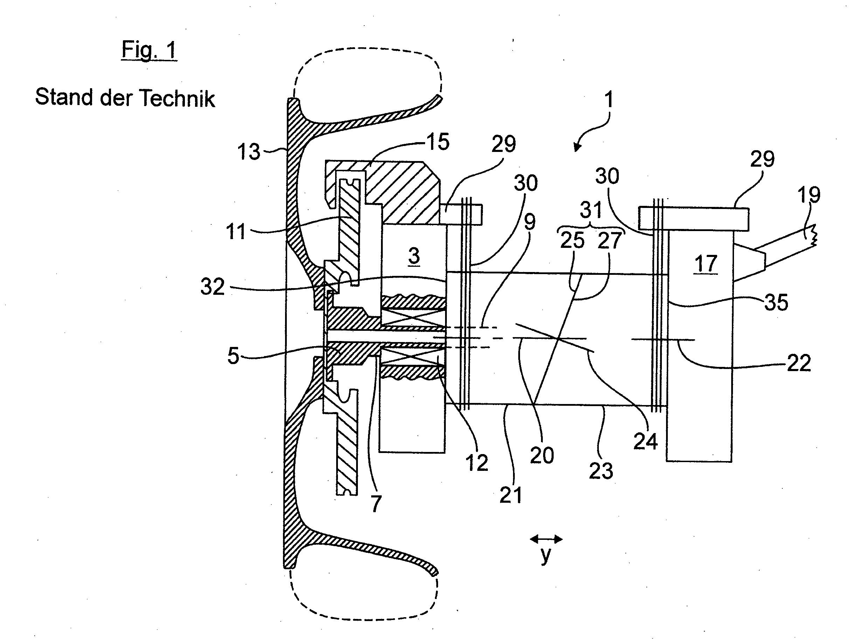

In der Fig. 1 ist zum einfacheren Verständnis der Erfindung eine grob schematische Darstellung eines nicht von der Erfindung umfassten, aus dem Stand der Technik bekannten Radträgers 1 eines Fahrzeugrads 13 gezeigt.

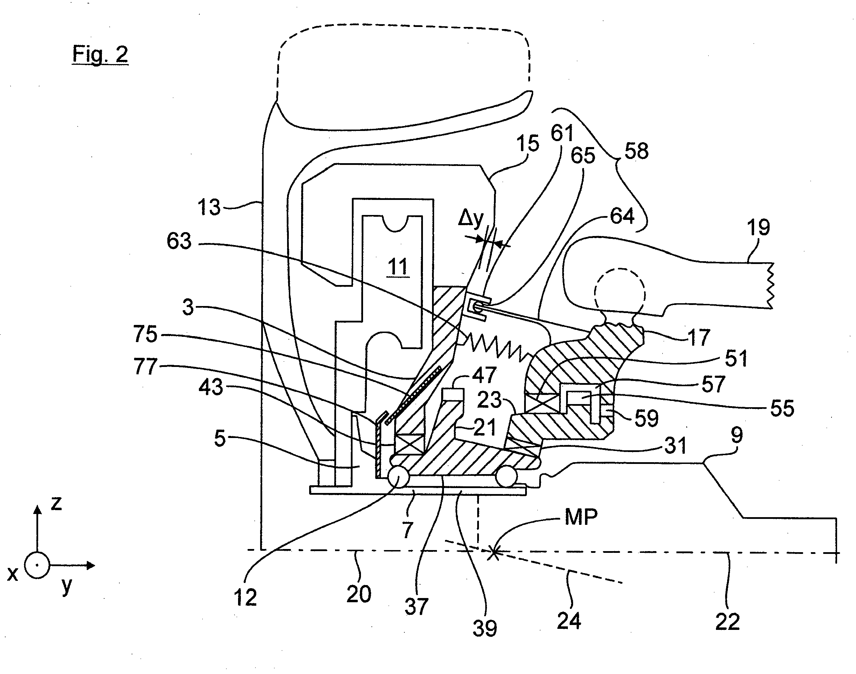

Der Radträger 1 weist ein Trägerteil 3 auf, in dem ein Radflansch 5 mit seinem Nabenabschnitt 7 drehbar in einem Radlager 12 gelagert ist. Am Radflansch 5 ist eine Bremsscheibe 11 sowie ein Fahrzeugrad 13 mit seiner Felge montiert. Die Bremsscheibe 11 ist zusammen mit einem am Trägerteil 3 montierten Bremssattel 15 Bestandteil einer Bremsanlage. Durch den Radträger 1 hindurch ist eine, das Fahrzeugrad 13 antreibende Gelenkwelle geführt, an dessen Gleichlaufgelenk (nur in der Fig. 2 mit Bezugsziffer 9 gezeigt) eine ebenfalls nicht dargestellte Zentralschraube eingeschraubt ist, mit der über die Radnabe 5 und das Gleichlaufgelenk 9 das Radlager 12 verspannt wird.

Ferner weist der Radträger 1 ein Führungsteil 17 auf, an dem in der Fig. 1 beispielhaft ein Lenker 19 der Radaufhängung angelenkt ist. Zwischen dem Trägerteil 3 und dem Führungsteil 17 sind als Stellelemente zwei Drehteile 21, 23 vorgesehen. Das Drehteil 21 ist unter Bildung einer Drehteil-Achse 20 an einer Lagerstelle 32 drehbar mit dem Trägerteil 3 verbunden. Das Drehteil 23 ist unter Bildung der Drehachse 22 an einer Lagerstelle 35 mit dem Führungsteil 17 verbunden. In der Fig. 1 sind die beiden Drehteile 21, 23 über plane Schrägflächen 25, 27 zueinander in Gleitlagerung und über eine Drehachse 24 verdrehbar miteinander verbunden. Die Drehachse 24 ist in der Fig. 1 senkrecht zu den Schrägflächen 25, 27 sowie in einem definierten Winkel zur Drehachse 22 des achsseitigen Drehteils 23 geneigt ausgerichtet.

In der Fig. 1 ist beispielhaft die Drehteil-Achse 20 lageidentisch mit der Radachse. In Abkehr davon kann jedoch das Drehteil 21 nicht koaxial zur Radachse angeordnet sein, sondern können die Drehteil-Achse 20 und die Radachse zueinander schräggestellt sein.

Sowohl am Trägerteil 3 als auch am Führungsteil 17 ist jeweils ein elektrischer Stellmotor 29 vorgesehen, der mit den Drehteilen 21, 23 über Zahnradtriebe 30 trieblich verbunden ist. Mittels der Stellmotoren 29 können die beiden Drehteile 21, 23 gleichsinnig oder gegensinnig in beide Drehrichtungen verdreht werden, wodurch das Trägerteil 3 relativ zum Führungsteil 17 eine Schwenkbewegung oder Taumelbewegung um einen Momentanpol MP (Fig. 2 bis 5) ausführt und so den Spurwinkel und/oder den Sturzwinkel des Fahrzeugrads 13 entsprechend verändert.

In der Fig. 1 ist also zwischen dem radseitigen Trägerteil 3 und dem radseitigen Drehteil 21 die Lagerstelle 32 gebildet, zwischen den beiden Drehteilen 21, 23 die Lagerstelle 31, bestehend aus den beiden Schrägflächen 25, 27, sowie zwischen dem achsseitigen Drehteil 23 und dem Führungsteil 17 eine weitere Lagerstelle 35 gebildet.

In der Fig. 2 ist der erfindungsgemäße Radträger 1 gezeigt. Im Unterschied zur Fig. 1 sind die beiden Drehteile 21, 23 nicht mehr über plane Schrägflächen 25, 27 in Anlage, um die schräggestellte Drehachse 24 zu definieren, sondern an einer Drehlagerstelle 31. Diese kann beispielhaft als ein Wälz- und Gleitlager oder auch aus Kombinationen aus mehreren dieser Lager realisiert sein, die im Wesentlichen alle Translations -und Rotationsrichtungen festhalten, und zwar bis auf die Drehachse. Diese Verallgemeinerung gilt auch für die sonstigen, in den Figuren beschriebenen Lagerstellen.

Zudem ist in der Fig. 2 das Radlager 12 nicht mehr unmittelbar im radseitigen Trägerteil 3 integriert, sondern vielmehr unmittelbar innerhalb des radseitigen Drehteils 21. In der Fig. 2 sind die Lageraußenbahnen und die Lagerinnenbahnen des Radlagers 12 rein exemplarisch unmittelbar im Innenumfang des radseitigen Drehteils 21 sowie unmittelbar im Außenumfang des Nabenabschnittes 7 des Radflansches 5 eingearbeitet. Entsprechend dient in der Fig. 2 das radseitige Drehteil 21 in Doppelfunktion auch als ein äußeres Lagergehäuse des Radlagers 12. Am Außenumfang des radseitigen Drehteils 21 ist in Fahrzeugquerrichtung y außen das Trägerteil 3 über eine Lagerstelle 43 radial außen auf dem radseitigen Drehteil 21 abgestützt. Die Lagerstelle 43 muß so ausgelegt sein, dass Kippmomente aufgenommen werden können.

In Abkehr von der Fig. 2 kann in einer technischen Umsetzung das Radlager 12 demontierbar ausgeführt sein, und zwar mit einem radial äußeren Lagergehäuse, das demontierbar, das heißt zum Beispiel im Presssitz oder durch Verschraubung, am Innenumfang des Drehteils 21 montiert ist, und/oder mit einem radial inneren Lagergehäuse, das am Außenumfang der Radnabe 5 montierbar ist.

Wie aus der Fig. 2 weiter hervorgeht, sind die Lagerstelle 43 sowie die Drehlagerstelle 31 rein exemplarisch an axial gegenüberliegenden Seiten des Drehteils 21 ausgebildet, wobei dazwischen ein Zahnradabschnitt 47 positioniert ist, der Bestandteil des Zahnradtriebs 30 (Fig. 1) ist.

Das achsseitige Führungsteil 17 ist - analog zum Trägerteil 3 - an einem Drehlager 51 radial außen auf dem achsseitigen Drehteil 23 abgestützt. Im weiteren Verlauf in der Fahrzeugquerrichtung y nach innen ist am Außenumfang des achsseitigen Drehteils 23 beispielhaft ein weiterer Zahnradabschnitt 55 angeformt, der ebenfalls Bestandteil des Zahnradtriebs 30 ist. Der Zahnradabschnitt 55 des achsseitigen Drehteils 23 ist in einem Ringraum 57 positioniert, der in der Fahrzeugquerrichtung y nach außen durch das Drehlager 51 begrenzt ist und nach innen durch eine Ringdichtung 59 begrenzt ist, die zwischen dem Führungsteil 17 und dem achsseitigen Drehteil 23 angeordnet ist. Die Ringdichtung 59 ist neben der beweglichen Dichtung 63 (das heißt Gummimanschette) lediglich beispielhaft dargestellt. Selbstverständlich können darüber hinaus an allen anderen Lagerstellen ebenfalls Dichtungen angebracht sein.

Erfindungsgemäß trägt das radseitige Trägerteil 3 - neben zum Beispiel einer elektronischen Parkbremse - nur noch den Bremssattel 15, den Antriebsmotor 29 für das radseitige Drehteil 21 sowie die später beschriebene Drehmomentabstützung 61, jedoch nicht mehr das Radlager 12. Dadurch wird speziell das zwischen dem Trägerteil 3 und dem radseitigen Drehteil 21 angeordnete Drehlager 43 aus dem Radkraftfluss genommen. Dies führt dazu, dass bezogen auf die auftretenden Radkräfte nur noch drei Lagerstellen in Serie geschaltet sind, und zwar das Radlager 12, das Drehlager 31 sowie das Stützlager 51, nicht jedoch die Lagerstelle 43, an der das Trägerteil 3 auf dem radseitigen Drehteil 21 abgestützt ist. Von daher kann die auf dem radseitigen Drehteil 21 sitzende Lagerstelle 43 wesentlich kleiner ausgelegt sein, da die dort einwirkenden Radkräfte und -momente sehr viel geringer ausfallen. Durch Wegfall der Lagerstelle 43 aus dem Radkraftfluss erhöht sich zudem die Sturzsteifigkeit des Lagerverbundes, wodurch die verbleibenden Lager, das heißt das Radlager 12, das Drehlager 31 sowie das Stützlager 51, bei - im Vergleich zum Stand der Technik - gleichbleibender Sturzsteifigkeit kleiner ausgelegt werden können.

Wie aus der Fig. 2 weiter hervorgeht ist radial außerhalb der Drehteile 21, 23 eine Lagerstelle 58 ausgebildet, an der das Trägerteil 3 und das Führungsteil 17 aneinander angelenkt sind. Die Lagerstelle 58 ist ein Gummimetalllager, das mit einem am Trägerteil 3 angeformten Lagergehäuse 61 und einem darin einragenden Lagerkern 64 aufgebaut ist, der am Führungsteil 17 angeformt ist. Zwischen dem Lagerkern 64 und dem Lagergehäuse 61 ist ein Elastomermaterial 65 vorgesehen. Das Gummimetalllager 58 ist radial außerhalb einer umlaufenden Gummimanschette 62 angeordnet, die die Drehteile 21, 23 und deren Lagerstellen schmutzdicht abdichtet.

Das Gummimetalllager 58 weist in der Radachsen-Umfangsrichtung eine harte Kennung und in der Fahrzeugquerrichtung y eine weiche Kennung auf. Zur Realisierung der Querweichheit ist in der Fig. 2 der Lagerkern 64 um einen freien Lagerweg Δy zwischen nicht gezeigten Queranschlägen teleskopartig verstellbar im Lagergehäuse 61 in der Querrichtung y geführt.

Zur Abstützung des mit einem Bremsmoment beaufschlagten Trägerteils 3 ist das Gummimetalllager 58 in der Radachsen-Umfangsrichtung hart ausgelegt. Für ein störungsfreies Verstellen des Trägerteils 3 um den Spur und/oder Sturzwinkel ist das Gummimetalllager 58 dagegen in der Fahrzeugquerrichtung y weich ausgelegt. Das heißt, das Gummimetalllager 58 ist in der Fahrzeugquerrichtung y ausreichend nachgiebig ausgelegt, um die Taumelbewegung des radseitigen Drehteils 21 mit daran gekoppeltem Trägerteil 3 nicht zu beeinträchtigen.

Das Gummimetalllager 58 wirkt als eine Drehmomentbrücke, über das ein Drehmoment, insbesondere ein Bremsmoment, vom Trägerteil 3 zum Führungsteil 17 übertragbar ist.

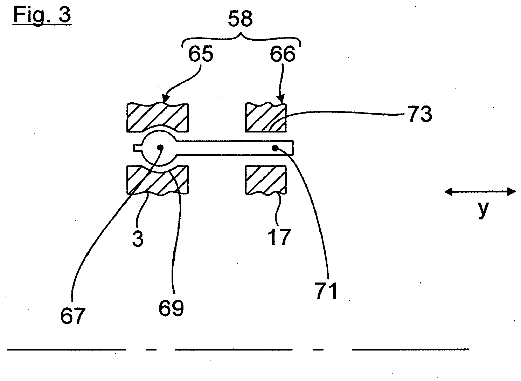

In der Fig. 3 ist die Lagerstelle 58 zwischen dem Trägerteil 3 und dem Führungsteil 17 nicht als ein Gummimetalllager ausgeführt, sondern als ein Lagergelenk. Das Lagergelenk weist in Kombination ein im Trägerteil 3 ausgebildetes Kugelgelenk 65 und ein im Führungsteil 17 ausgebildetes Verschiebegelenk 66 auf. Das Kugel- und das Verschiebegelenk 65, 66 können auch umgekehrt im Führungsteil 1 7 und Trägerteil ausgebildet sein.

Das Kugelgelenk 65 weist gemäß der Fig. 3 eine Gelenkkugel 67 auf, die in korrespondierenden Gelenkpfannen 69 des Trägerteils 3 schwenkbar gelagert sind. Die Gelenkkugel 67 ist in der Rotationsrichtung weich und in der Querrichtung y steif gelagert. In der Fig. 3 ist die Gelenkkugel 67 mit einem Gelenkstab 71 verlängert, der zur Herstellung der Querweichheit der Lageranordnung in der Querrichtung y in einem Lagerkanal 73 des Verschiebegelenks 66 im Wesentlichen spielfrei verschiebbar ist. der Gelenkstab 71 ist somit in der Rotationsrichtung steif und in der Querrichtung weich gelagert.

Das Verschiebegelenk 66 kann in beliebiger Weise realisiert werden. Anstelle des Lagerkanals 73 des Verschiebegelenks 66 kann beispielhaft eine Lagerschiene vorgesehen werden oder ein Gummimetalllager, in dem der Gelenkstab 71 aufgenommen ist. Ebenso kann das Kugelgelenks 65 auch als ein Gummimetalllager ausgeführt sein, das die gleiche Funktionalität, wie oben beschrieben aufweist.

Wie aus der Fig. 2 weiter hervorgeht, weist der Radträger einen ABS-Sensor 75 mit Encoderring 77 auf. Der ABS-Sensor 75 ist im Trägerteil 3 verbaut, während der Encoderring 77 am Radflansch 5 befestigt ist. Die Anordnung des ABS-Sensors 75 und des Encoderrings 77 ist so gewählt, dass bei einer Sturz- und/oder Spurverstellung eine Kollision mit den angrenzenden Bauteilen, etwa den Drehteilen 21, 23, ausgeschlossen ist. Entsprechend ist der Encoderring 77 axial auf der dem Fahrzeugrad 13 zugewandten Seite des Radlagers 12 positioniert, auf dem Radflansch 5 befestigt und mit im Vergleich zu herkömmlichen Ausführungen erhöhtem Außendurchmesser ausgebildet. Der ABS-Sensor 75 ist in einer Schrägstellung im Trägerteil 3 gelagert.

## Patentansprüche

1. Vorrichtung zum Verstellen von Sturz und/oder Spur eines Fahrzeugrads (13) eines Kraftfahrzeugs, mit einem Radträger (1), der mehrteilig mit einem radseitigen Trägerteil (3) und einem achsseitigen Führungsteil (17) sowie mit einem dazwischen angeordneten Stellglied mit zwei Drehteilen (21, 23) aufgebaut ist, mittels dem das radseitige Trägerteil (3) zur Spur- und/oder Sturzverstellung des Fahrzeugrads (13) um einen Taumelpunkt (MP) verschwenkbar ist, wobei das radseitige Trägerteil (3) einen mit einer Bremsscheibe (11) des Fahrzeugrads (13) zusammenwirkenden Bremssattel (15) trägt, wobei radial außerhalb des Stellglieds (21, 23) eine Lagerstelle (58) ausgebildet ist, an der das Trägerteil (3) und das Führungsteil (17) aneinander angelenkt sind, und wobei die Lagerstelle (58) zur Abstützung des mit einem Bremsmoment beaufschlagten Trägerteils (3) in der Radachsen-Umfangsrichtung hart und für ein störungsfreies, im Vergleich zur Radachsen-Umfangsrichtung leichtgängiges Verstellen des Trägerteils (3) um den Spur- und/oder Sturzwinkel in der Fahrzeugquerrichtung (y) weich ausgelegt ist, **dadurch gekennzeichnet, dass** die Lagerstelle (58) zumindest ein Gummimetalllager ist, das in der Radachsen-Umfangsrichtung eine harte Kennung und in der Fahrzeugquerrichtung (y) eine weiche Kennung aufweist.

2. Vorrichtung nach Anspruch 1, **dadurch gekennzeichnet, dass** die Lagerstelle (58) aus einem Lagergehäuse (61) und einem Lagerkern (64) mit zwischengeordnetem Elastomermaterial (65) aufgebaut ist, die insbesondere jeweils am Trägerteil (3) und am Führungsteil (17) materialeinheitlich und einstückig angeformt sind, und dass zur Realisierung der Lager-Querweichheit der Lagerkern (64) um einen Lagerweg (Δy) zwischen Queranschlägen teleskopartig verstellbar gegenüber dem Lagergehäuse (61) ist.

3. Vorrichtung zum Verstellen von Sturz und/oder Spur eines Fahrzeugrads (13) eines Kraftfahrzeugs, mit einem Radträger (1), der mehrteilig mit einem radseitigen Trägerteil (3) und einem achsseitigen Führungsteil (17) sowie mit einem dazwischen angeordneten Stellglied mit zwei Drehteilen (21, 23) aufgebaut ist, mittels dem das radseitige Trägerteil (3) zur Spur- und/oder Sturzverstellung des Fahrzeugrads (13) um einen Taumelpunkt (MP) verschwenkbar ist, wobei das radseitige Trägerteil (3) einen mit einer Bremsscheibe (11) des Fahrzeugrads (13) zusammenwirkenden Bremssattel (15) trägt, wobei radial außerhalb des Stellglieds (21, 23) eine Lagerstelle (58) ausgebildet ist, an der das Trägerteil (3) und das Führungsteil (17) aneinander angelenkt sind, und wobei die Lagerstelle (58) zur Abstützung des mit einem Bremsmoment beaufschlagten Trägerteils (3) in der Radachsen-Umfangsrichtung hart und für ein störungsfreies, im Vergleich zur Radachsen-Umfangsrichtung leichtgängiges Verstellen des Trägerteils (3) um den Spur- und/oder Sturzwinkel in der Fahrzeugquerrichtung (y) weich ausgelegt ist, **dadurch gekennzeichnet, dass** die Lagerstelle (58) zwischen dem Trägerteil (3) und dem Führungsteil (17) als ein Lagergelenk ausgeführt ist, das in Kombination ein in einem Lagerpartner (3) ausgebildetes Kugelgelenk (65) und ein im anderen Lagerpartner (17) ausgebildetes Verschiebegelenk (66) aufweist.

4. Vorrichtung nach Anspruch 3, **dadurch gekennzeichnet, dass** das Kugelgelenk (65) in der Rotationsrichtung weich und in der Fahrzeugquerrichtung (y) hart ausgeführt ist, und/oder dass das Verschiebegelenk (66) in der Rotationsrichtung hart und in der Fahrzeugquerrichtung (y) weich ausgeführt ist.

5. Vorrichtung nach Anspruch 3 oder 4, **dadurch gekennzeichnet, dass** das Kugelgelenk (65) eine Gelenkkugel (67) aufweist, die in korrespondierenden Gelenkpfannen (69) des einen Lagerpartners (3) schwenkbar gelagert sind, und/oder dass die Gelenkkugel (67) mit einem Gelenkstab (71) verlängert ist, der zur Herstellung der Querweichheit der Lageranordnung in der Querrichtung (y) in einem Lagerkanal (73) des Verschiebegelenks (66) im Wesentlichen spielfrei verschiebbar ist.

6. Vorrichtung nach Anspruch 3 oder 4, **dadurch gekennzeichnet, dass** das Kugelgelenks (65) und/oder das Verschiebegelenk (66) jeweils als ein Gummimetalllager ausführbar ist.

7. Vorrichtung nach einem der vorhergehenden Ansprüche, **dadurch gekennzeichnet, dass** das Trägerteil (3) radial außerhalb des radseitigen Drehteils (21) angeordnet ist, und dass das Trägerteil (3) über eine radial innere Lagerstelle (43) auf dem radseitigen Drehteils (21) abgestützt ist.

## Claims

1. Apparatus for the adjustment of camber and/or toe of a vehicle wheel (13) of a motor vehicle, having a wheel carrier (1), which is constructed in several parts with a wheel-side carrier part (3) and an axle-side guide part (17) and having an actuator arranged therebetween with two turning parts (21, 23), by means of which the wheel-side carrier part (3) is pivotable for the toe- and/or camber adjustment of the vehicle wheel (13) about a wobble point (MP), wherein the wheel-side carrier part (3) carries a brake calliper (15) interacting with a brake disc (11) of the vehicle wheel (13), wherein radially outside of the actuator (21, 23) a bearing position (58) is formed, at which the carrier part (3) and the guide part (17) are hinged together, and wherein the bearing position (58) is designed hard for the support of the carrier part (3) subjected to a braking torque in the wheel axle circumferential direction and soft for an interference-free smooth-running adjustment of the carrier part (3) in comparison to the wheel axle circumferential direction around the toe- and/or camber angle in the vehicle transverse direction (y), **characterised in that** the bearing position (58) is at least a rubber-metal bearing, which in the wheel axle circumferential direction has a hard identification and in the vehicle transverse direction (y) a soft identification.

2. Apparatus according to claim 1, **characterised in that** the bearing position (58) is constructed from a bearing housing (61) and a bearing core (64) with interposed elastomeric material (65), which in particular in each case is moulded integrally and in one piece on the carrier part (3) and on the guide part (17), and that for the realisation of the bearing transverse softness the bearing core (64) is telescopically adjustable relative to the bearing housing (61) about a bearing path (Δy) between transverse stops.

3. Apparatus for the adjustment of camber and/or toe of a vehicle wheel (13) of a motor vehicle, having a wheel carrier (1), which is constructed in several parts with a wheel-side carrier part (3) and an axle-side guide part (17) and having an actuator arranged therebetween with two turning parts (21, 23), by means of which the wheel-side carrier part (3) is pivotable for the toe- and/or camber adjustment of the vehicle wheel (13) about a wobble point (MP), wherein the wheel-side carrier part (3) carries a brake calliper (15) interacting with a brake disc (11) of the vehicle wheel (13), wherein radially outside of the actuator (21, 23) a bearing position (58) is formed, at which the carrier part (3) and the guide part (17) are hinged together, and wherein the bearing position (58) is designed hard for the support of the carrier part (3) subjected to a braking torque in the wheel axle circumferential direction and soft for an interference free smooth running adjustment of the carrier part (3) in comparison to the wheel axle circumferential direction around the toe- and/or camber angle in the vehicle transverse direction (y), **characterised in that** the bearing position (58) between the carrier part (3) and the guide part (17) is designed as a bearing joint, which in combination has a ball joint (65) designed as a bearing partner (3) and a sliding joint (66) formed in the other bearing partner (17).

4. Apparatus according to claim 3, **characterised in that** the bearing joint (65) is designed soft in the direction of rotation and hard in the vehicle transverse direction (y), and/or that the sliding joint (66) is designed hard in the direction of rotation and soft in the vehicle transverse direction (y).

5. Apparatus according to claim 3 or 4, **characterised in that** the ball joint (65) has a joint ball (67), which are pivotably mounted in the corresponding joint sockets (69) of the one bearing partner (3), and/or that the joint ball (67) is extended with an articulated rod (71), which can be displaced substantially free from play for the production of the transverse softness of the bearing arrangement in the transverse direction (y) in a bearing channel (73) of the sliding joint (66).

6. Apparatus according to claim 3 or 4, **characterised in that** the ball joint (65) and or the sliding joint (66) are executable in each case as a rubber-metal bearing.

7. Apparatus according to any one of the preceding claims, **characterised in that** the carrier part (3) is arranged radially outside the wheel-side turning part (21), and that the carrier part (3) is supported via a radial inner bearing position (43) on the wheel-side turning part (21).

## Revendications

1. Dispositif de réglage du carrossage et/ou du pincement d'une roue de véhicule (13) d'un véhicule automobile, avec un support de roue (1), qui se compose de plusieurs parties avec un élément de support (3) côté roue et un élément de guidage (17) côté axe ainsi qu'avec un organe de réglage agencé entre avec deux éléments rotatifs (21, 23), au moyen duquel l'élément de support (3) côté roue peut être pivoté autour d'un point de nutation (MP) pour le réglage du pincement et/ou du carrossage de la roue de véhicule (13), dans lequel l'élément de support (3) côté roue porte un étrier de frein (15) coopérant avec un disque de frein (11) de la roue de véhicule (13), dans lequel un point d'appui (58) est réalisé radialement à l'extérieur de l'organe de réglage (21, 23) au niveau duquel l'élément de support (3) et l'élément de guidage (17) sont articulés l'un à l'autre, et dans lequel le point d'appui (58) est conçu dur pour l'appui de l'élément de support (3) sollicité avec un couple de freinage dans la direction circonférentielle d'axe de roue et mou pour un réglage sans incident facile par rapport à la direction circonférentielle d'axe de roue de l'élément de support (3) autour de l'angle de pincement et/ou de carrossage dans la direction transversale de véhicule (y), **caractérisé en ce que** le point d'appui (58) est au moins un palier caoutchouc métal, qui présente dans la direction circonférentielle d'axe de roue un identifiant dur et dans la direction transversale de véhicule (y) un identifiant mou.

2. Dispositif selon la revendication 1, **caractérisé en ce que** le point d'appui (58) se compose d'un logement de palier (61) et d'un noyau de palier (64) avec matériau élastomère (65) interposé, qui sont formés en une seule matière et d'un seul tenant en particulier respectivement sur l'élément de support (3) et sur l'élément de guidage (17), et que pour la réalisation de la souplesse transversale de palier le noyau de palier (64) est réglable de manière télescopique par rapport au logement de palier (61) d'une distance de palier (Δy) entre des butées transversales.

3. Dispositif de réglage du carrossage et/ou du pincement d'une roue de véhicule (13) d'un véhicule automobile, avec un support de roue (1), qui se compose de plusieurs parties avec un élément de support (3) côté roue et un élément de guidage (17) côté axe ainsi qu'avec un organe de réglage agencé entre avec deux éléments rotatifs (21, 23), au moyen duquel l'élément de support (3) côté roue peut être pivoté autour d'un point de nutation (MP) pour le réglage du pincement et/ou du carrossage de la roue de véhicule (13), dans lequel l'élément de support (3) côté roue porte un étrier de frein (15) coopérant avec un disque de frein (11) de la roue de véhicule (13), dans lequel un point d'appui (58) est réalisé radialement à l'extérieur de l'organe de réglage (21, 23) au niveau duquel l'élément de support (3) et l'élément de guidage (17) sont articulés l'un à l'autre, et dans lequel le point d'appui (58) est conçu dur pour l'appui de l'élément de support (3) sollicité avec un couple de freinage dans la direction circonférentielle d'axe de roue et mou pour un réglage sans incident facile par rapport à la direction circonférentielle d'axe de roue de l'élément de support (3) autour de l'angle de pincement et/ou de carrossage dans la direction transversale de véhicule (y), **caractérisé en ce que** le point d'appui (58) entre l'élément de support (3) et l'élément de guidage (17) est réalisé en tant qu'articulation d'appui, qui présente en combinaison une articulation sphérique (65) réalisée dans un partenaire d'appui (3) et une articulation coulissante (66) réalisée dans l'autre partenaire d'appui (17).

4. Dispositif selon la revendication 3, **caractérisé en ce que** l'articulation sphérique (65) est réalisée mou dans le sens de rotation et dur dans la direction transversale de véhicule (y) et/ou que l'articulation coulissante (66) est réalisée dur dans le sens de rotation et mou dans la direction transversale de véhicule (y).

5. Dispositif selon la revendication 3 ou 4, **caractérisé en ce que** l'articulation sphérique (65) présente une rotule (67), qui sont logées de manière pivotante dans des coussinets d'articulation (69) correspondants de l'un partenaire d'appui (3), et/ou que la rotule (67) est prolongée avec une tige d'articulation (71), qui est coulissante sensiblement sans jeu pour la réalisation de la souplesse transversale de l'ensemble palier dans la direction transversale (y) dans un canal d'appui (73) l'articulation coulissante (66).

6. Dispositif selon la revendication 3 ou 4, **caractérisé en ce que** l'articulation sphérique (65) ou l'articulation coulissante (66) peut être réalisée respectivement en tant que palier caoutchouc métal.

7. Dispositif selon l'une quelconque des revendications précédentes, **caractérisé en ce que** l'élément de support (3) est agencé radialement à l'extérieur de l'élément rotatif (21) côté roue, et que l'élément de support (3) s'appuie sur l'élément rotatif (21) côté roue par le biais d'un point d'appui (43) radialement intérieur.
